# EUROPEAN PATENT SPECIFICATION

(11) **EP 1 838 087 B1**
(45) Date of publication and mention of the grant of the patent: **16.09.2009**
(21) Application number: 07103043.1
(22) Date of filing: 26.02.2007
(51) Int. Cl.: H04N 5/225, H04N 5/232, G03B 17/04

(54) **Portable Electronic Device Having Triaxial Hinge Structure**
Tragbare elektronische Vorrichtung mit dreiachsiger Gelenkkonstruktion
Dispositif électronique portable comportant une structure à charnière triaxiale

(30) Priority: 20.03.2006 KR 20060025413
(43) Date of publication of application: 26.09.2007
(73) Proprietor: Samsung Electronics Co., Ltd., Suwon-si Gyeonggi-do (KR)
(72) Inventor: Yi, Byeong-woo, Dongchun-dong, Yeonsu-gu Incheon (KR)
(74) Representative: Grünecker, Kinkeldey, Stockmair & Schwanhäusser Anwaltssozietät

(56) References cited:
- EP-A- 1 503 579
- EP-A- 1 622 363
- EP-A1- 0 581 286
- JP-A- 2001 034 182
- US-A1- 2001 004 269
- US-A1- 2004 000 031

## Description

### BACKGROUND OF THE INVENTION

### 1. Field of the Invention

The present general inventive concept relates to a portable electronic device having a triaxial hinge structure.

### 2. Description of the Related Art

Generally, a separately manufactured small-sized electronic device such as a display unit is rotatably connected to portable electronic device, such as a photographing apparatus, a cellular phone, a personal digital assistant (PDA), a notebook computer, or a portable audio/video play back apparatus, which can be carried and used by a user. The display unit includes a display panel such as a liquid crystal display (LCD) for use in video play back, and is rotatably connected in at least one direction to the portable device body by a hinge structure. The rotatable connection is provided so that a user can view an image played on the display panel when the portable electronic device is oriented in a variety of positions.

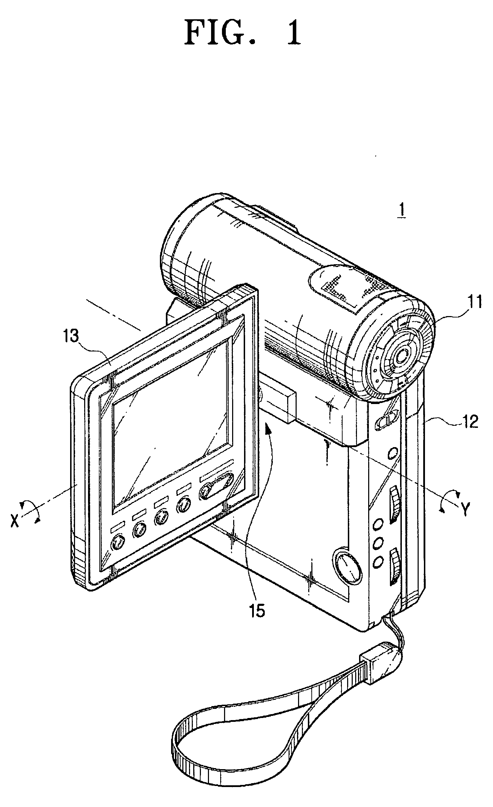

FIG. 1 is an exemplary view illustrating a camcorder in which a display unit is rotatably installed on a conventional portable electronic device such as the camcorder.

In FIG. 1, a conventional camcorder 1 includes an optical unit 11 to capture an object image, a main body 12 including operating buttons (illustrated but not numbered), and a display unit 13 which is rotatable about an X-axis and movable relative to the main body between the X-axis and a Y-axis with a biaxial hinge structure 15.

The display unit 13 displays an image of the object captured by the optical unit 11, and a user can view the image displayed on the display unit 13.

The conventional portable electronic device as described above has a structure in which the display unit 13 can be rotated 90° relative to the main body 12, that is, about the Y-axis, and can be rotated within a predetermined angle about the X-axis.

The display unit 13 of the conventional portable electronic device does not satisfy various photographing conditions which may arise because of factors such as the height of an object, a user's viewing position, or the like, due to the biaxial structure described above.

JP 2001 034 182 discloses a video camera provided with a monitor connected with the main body by means of a triaxial hinge structure.

### SUMMARY OF THE INVENTION

The present general inventive concept provides a portable electronic device having a triaxial hinge structure to improve movement of a display unit in a portable electronic device.

Additional aspects and advantages of the present general inventive concept will be set forth in part in the description which follows and, in part, will be obvious from the description, or may be learned by practice of the general inventive concept.

The foregoing and/or other aspects and utilities of the present general inventive concept may be achieved by providing a portable electronic device having a triaxial hinge structure as defined by claim 1 to improve movement of a rotating display unit and to improve and/or achieve further miniaturization of the portable electronic device.

Such may be substantially realized by providing a portable electronic device having a triaxial hinge structure including a first body, a second body to rotate about a first hinge axis relative to the first body, a third body to rotate relative to the second body not only about a second hinge axis but also about a third hinge axis, a first hinge unit to enable the second body to rotate about the first hinge axis, a second hinge unit to enable the third body to rotate about the second hinge axis, and a third hinge unit to enable the third body to rotate about the third hinge axis.

The second hinge unit may include a fixing member which can be fixed to the second body, a first hinge housing, one end of which can be rotatably fixed to the fixing member about the second hinge axis, and the other end thereof can be fixed to the third body, a first shaft, one end of which can be fixed to the fixing member and the other end thereof can pass through the first hinge housing, a first spring, which can be installed in the first hinge housing, and a first ball guide, which can be elastically pressurized by the first spring toward a surface of a first fixing part of the first shaft, where a first click ball can be disposed between one side of the first ball guide and the first fixing part of the first shaft.

The third hinge unit may include a second hinge housing, one end of which can be rotatably fixed to one side of the first hinge housing about the third hinge axis, and the other end thereof can be fixed to the third body, a second shaft, one end of which can be fixed to the first hinge housing, and the other end thereof can pass through the second hinge housing, a second spring, which can be installed in the second hinge housing, and a second ball guide, which can be elastically pressurized by the second spring toward a surface of a second fixing part of the second shaft, where a second click ball can be disposed between one side of the second ball guide and the second fixing part of the second shaft.

A first stopper may be installed on one side of the fixing member, and a first hook may be provided on one side of the first hinge housing corresponding to the fixing member and engaged with the first stopper to control a rotation angle of the first hinge housing.

At least one second stopper may be installed on one side of the first hinge housing, and at least one second hook may be provided on one side of the second hinge housing in a position spaced apart from the second stopper.

The foregoing and/or other aspects and utilities of the present general inventive concept may be achieved by providing a portable electronic device having a plurality of hinge structures, the device including a first hinge unit to connect a first body to a second body and to rotate the second body about a first hinge axis relative to the first body, and a second hinge unit to connect the second body to a third body and to rotate the third body about a second hinge axis and a third hinge axis relative to the second body.

The first hinge axis, the second hinge axis and the third hinge axis can be perpendicular to one another.

The second hinge unit can provide sufficient connectivity between the second body and the third body to rotate the second body together with the third body about the first hinge axis.

The first hinge axis and the third hinge axis can define a plane and the second hinge unit can permit sufficient movement of the third body to be tilted on either side of the plane about the third hinge axis.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:
FIG. 1 is an exemplary view illustrating a conventional camcorder in which a display unit is rotatably installed;
FIG. 2 is a perspective view illustrating a configuration of a portable electronic device according to an exemplary embodiment of the present general inventive concept;
FIG. 3A is a perspective view illustrating a position in which a second body of FIG. 2 is rotated 90° relative to a first body of FIG. 2;
FIG. 3B is a perspective view illustrating a position in which a third body of FIG. 2 is rotated 90° relative to the second body of FIG. 2 as compared to the position illustrated in FIG. 3A;
FIGS. 3C and 3D are perspective views illustrating positions in which the third body is inclined to the left and right, respectively, as compared to the position illustrated in FIG. 3B;
FIG. 4A is a perspective view illustrating a position in which the second body of FIG. 2 is rotated 180° relative to the first body of FIG. 2;
FIG. 4B is a perspective view illustrating a position in which the third body of FIG. 2 is rotated 90° relative to the second body of FIG. 2 as compared to the position illustrated in FIG. 4A;
FIGS. 4C and 4D are perspective views illustrating positions in which the third body is inclined to the left and right, respectively, as compared to the position illustrated in FIG. 4B;
FIG. 5 is a perspective view illustrating an assembled second hinge unit and a third hinge unit according to exemplary embodiments of the present general inventive concept, which are arranged corresponding to the position illustrated in FIG. 3A;
FIG. 6 is a partially exploded perspective view illustrating a disassembled second hinge unit and third hinge unit of FIG. 5;
FIG. 7 is a perspective view illustrating a position in which the second body and third body are arranged as illustrated in FIG. 4A;
FIG. 8 is an overall exploded perspective view illustrating a disassembled second hinge unit and third hinge unit of FIG. 5; and
FIG. 9 is a perspective view to illustrate the structure to control a rotation angle of the third hinge unit according to an exemplary embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

A portable electronic device having a triaxial hinge structure according to exemplary embodiments of the present general inventive concept will now be described in greater detail with reference to the accompanying drawings.

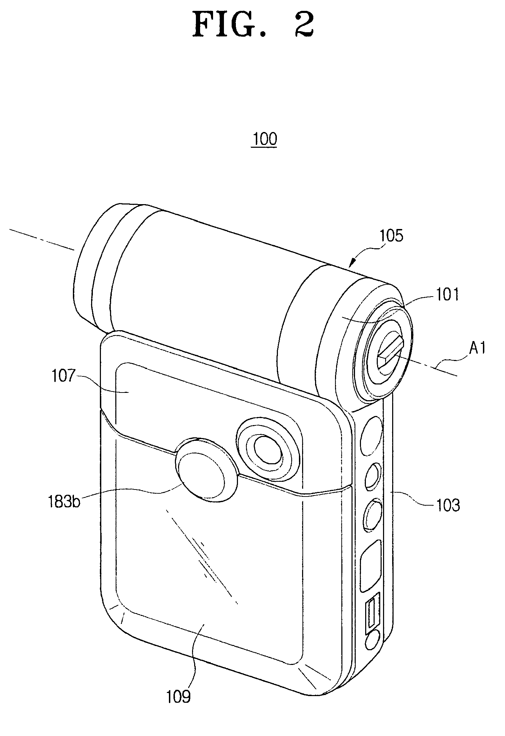

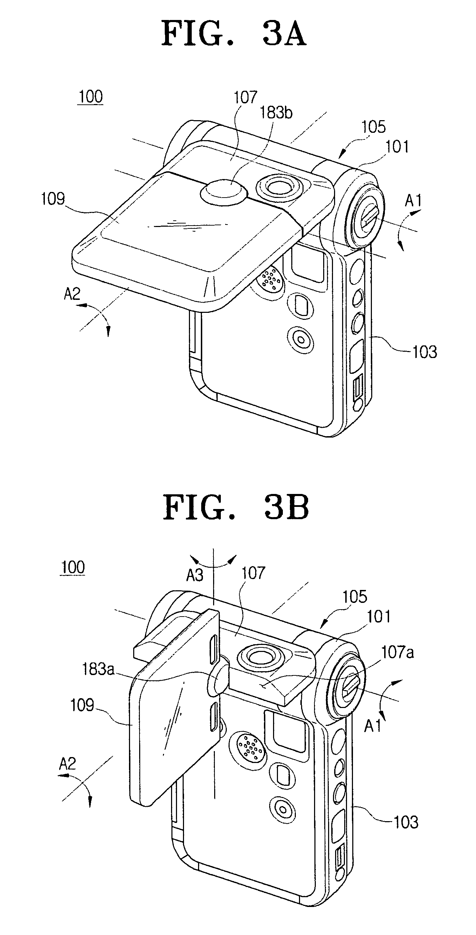

FIG. 2 is a perspective view illustrating the configuration of a portable electronic device according to an exemplary embodiment of the present general inventive concept. FIGS. 3A to 4D are views illustrating various rotational operations of a second body and a third body of a portable electronic device according to one or more exemplary embodiments of the present general inventive concept.

Referring to FIGS. 2, 3A, and 4A, a portable electronic device 100 employed in the exemplary embodiment, such as a camcorder, includes an optical unit 101 which can capture an image (e.g., of an object, person, other items, etc.), a first body 103 which can include operating buttons (not numbered), and a second body 107 which can be rotatably fixed to one side of the first body 103 by a first hinge unit 105.

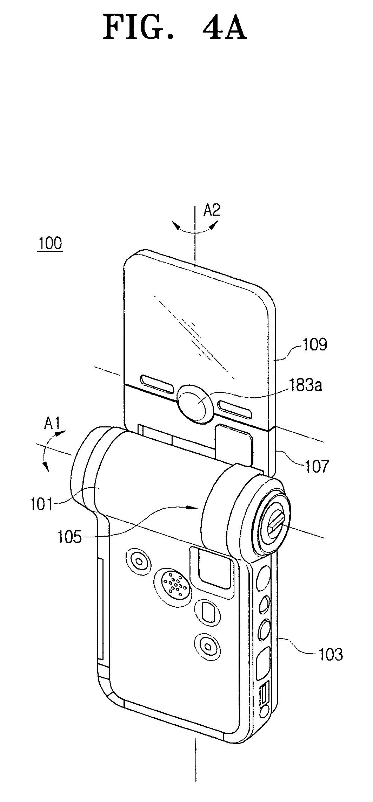

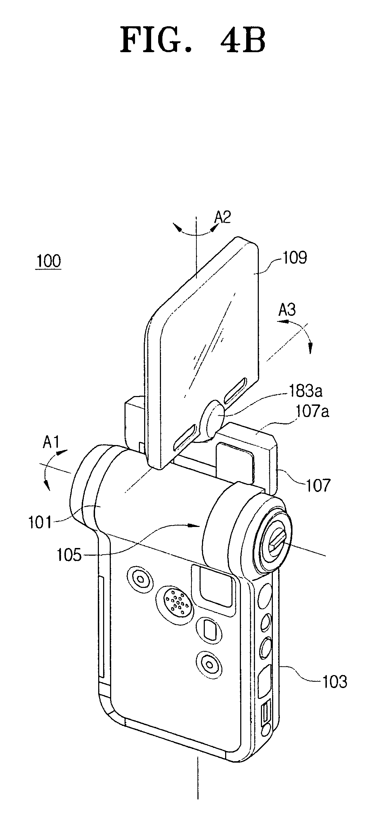

The second body 107 can be rotated about a first hinge axis A1 in a direction toward or away from the first body 103. The second body 107 may be rotated at various angles including, but not limited to, 90° or 180° relative to the first body 103, as illustrated in FIGS. 3A and 4A.

In the portable device, for example, a cellular phone, a camcorder or the like, the first hinge unit 105 can be generally configured so that a display unit can be rotated about an axis such as A1.

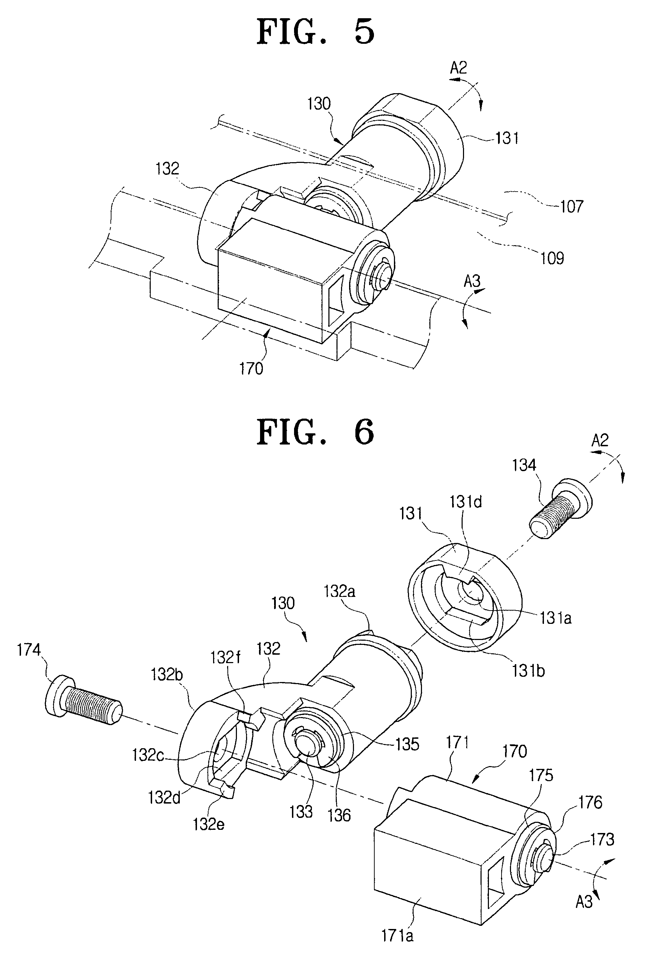

Referring to FIGS. 2, 3A, 3B and 4B, a third body 109 can be connected to the second body 107 which can be primarily rotated by the first hinge unit 105 described above. The third body 109 can be secondarily rotated relative to the second body 107 about a second hinge axis A2. The second hinge axis A2 can be perpendicular to a contact surface 107a of the second body 107. The third body 109 can rotate to a predetermined angle, such as 270°, about the second hinge axis A2 by a second hinge unit 130 (see illustrations of FIGS. 5, 6, and 8) described below. However, the rotation angle about the second hinge axis A2 is not limited to the described angle, and may be set to various angles anywhere from 0 to 360°, for example.

The third body 109 may be a display to play back an image captured by the optical unit 101 and to display the image.

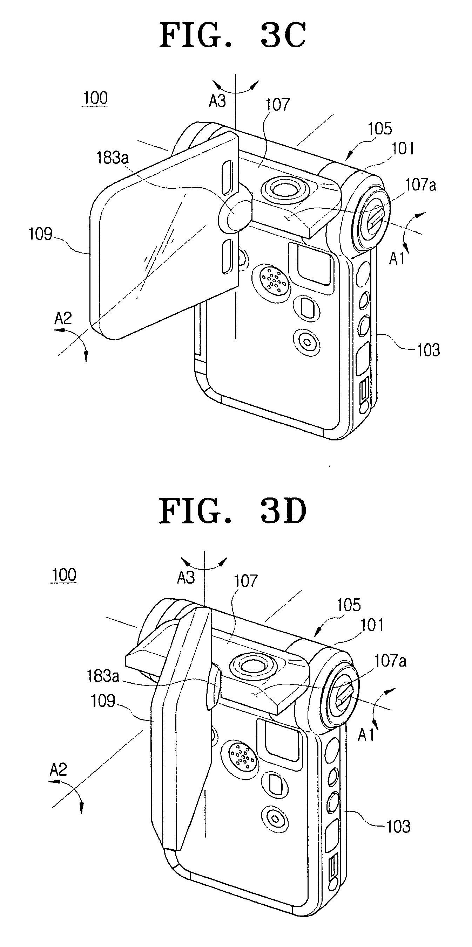

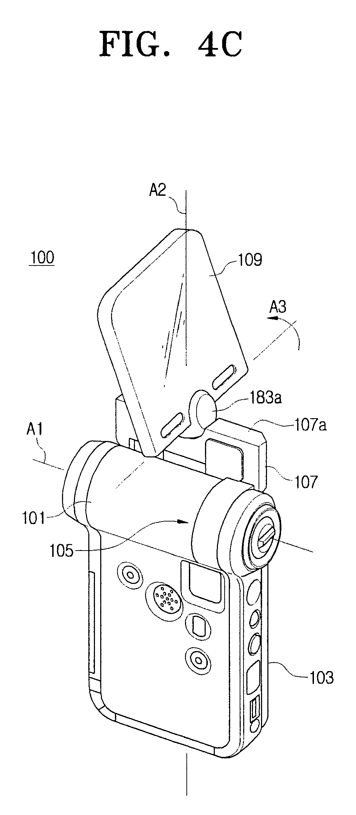

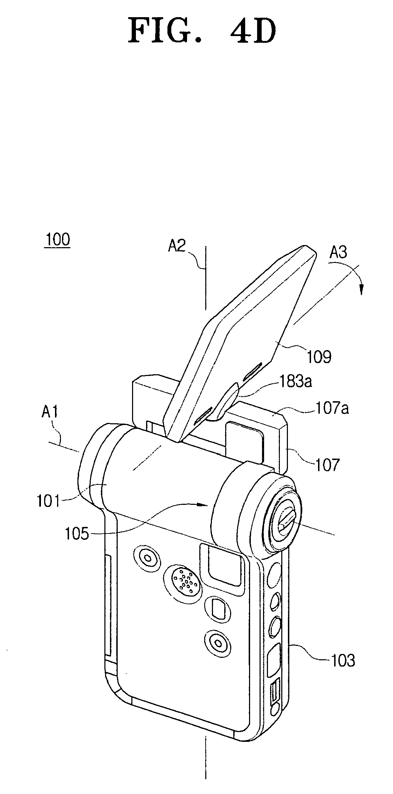

Referring to FIGS. 3C, 3D, 4C, and 4D, the third body 109 may be inclined to the right and left about a third axis A3, for example. Such inclinations may be facilitated by a third hinge unit 170 (see illustrations of FIGS. 5, 6, 8 and 9) which can be connected to one side of the second hinge unit 130.

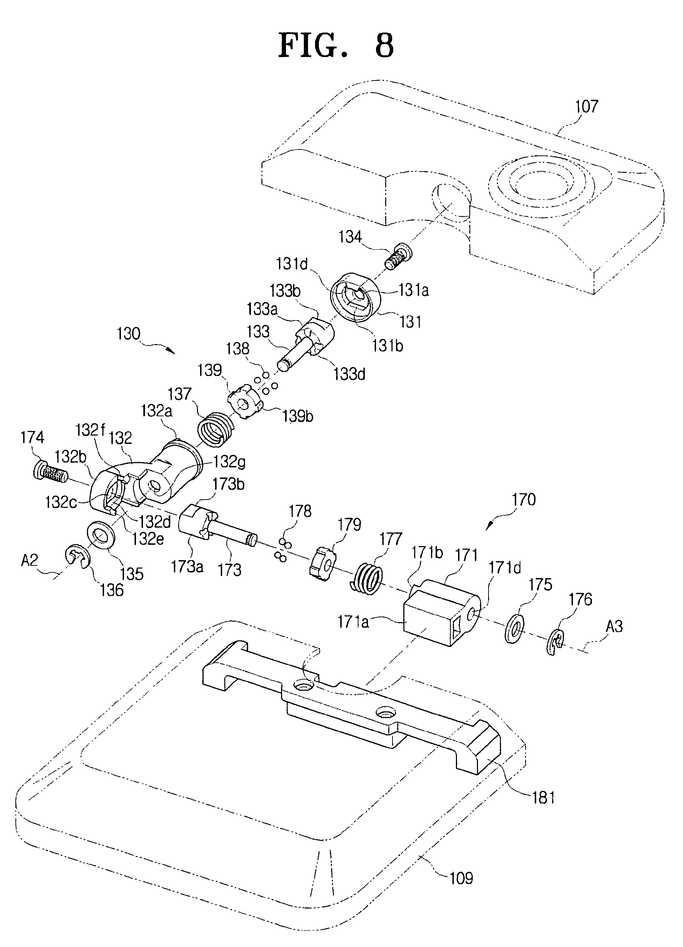

FIG. 5 is a perspective view illustrating an assembled second hinge unit 130 and a third hinge unit 170 according to an exemplary embodiment of the present general inventive concept, which are positioned as illustrated in FIGS. 3A and 8, for example. FIG. 6 is a partially exploded perspective view illustrating a disassembled second hinge unit 130 and third hinge unit 170 of FIG. 5.

Referring to FIG. 5, the second hinge unit 130 can include a fixing member 131 which can be fixed to the second body 107, and a first hinge housing 132, one end of which can be rotatably fixed to the fixing member 131 about the second hinge axis A2, and the other end opposite to the fixing member 131 can be fixed to the third body 109.

Referring to FIG. 6, a first shaft 133 can pass through the first hinge housing 132, and the first hinge housing 132 can be rotatably supported on the fixing member 131. One end of the first shaft 133 can be fixed to the fixing member 131 through a first fastening screw 134, and the other end of the first shaft 133 passing through the first hinge housing 132 can be secured by a first washer 135 and a first E-ring 136.

The third hinge unit 170 can include a second hinge housing 171 which can be rotatably fixed to one side of the first hinge housing 132 about the third hinge axis A3, and a second shaft 173 can rotatably support the second hinge housing 171 relative to the first hinge housing 132.

One end of the second shaft 173 can be fixed to the first hinge housing 132 through a second fastening screw 174, and the other end thereof can be secured by a second washer 175 and a second E-ring 176.

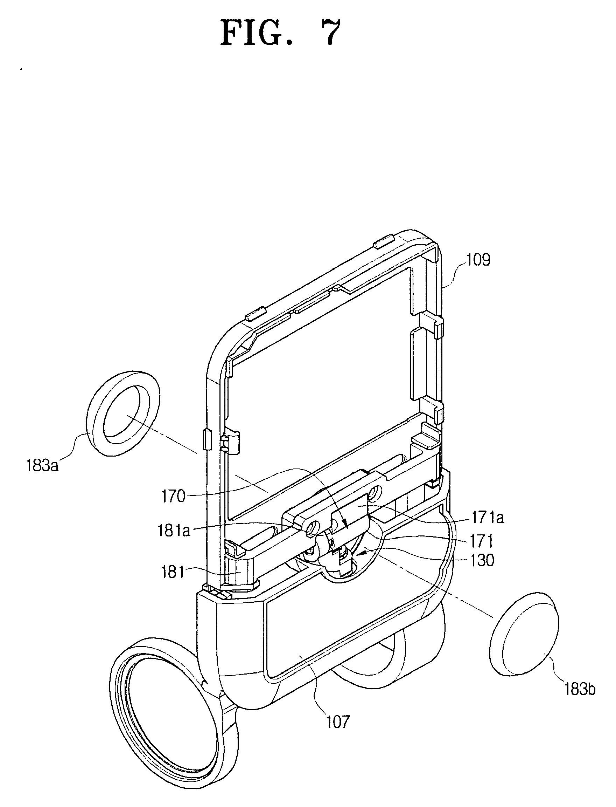

FIG. 7 is a perspective view illustrating a position in which the second body 107 and the third body 109 are arranged as illustrated in FIG. 4A.

FIG. 7 illustrates an inner structure of the third body 109 without an external case.

A connecting part 171a can be additionally formed on one side of the second hinge housing 171 to connect the third body 109, as also illustrated in FIGS. 6, 8 and 9, for example. The connecting part 171a can be inserted into an insert groove 181a of a bracket 181 that can be fixed to the interior of the third body 109, as illustrated in FIGS. 7 and 8, for example.

A pair of cases 183a and 183b can be provided to partially cover the second and third hinge units 130 and 170. The cases 183a and 183b can be of a roughly circular shape as illustrated. However, other suitable shapes may be used.

FIG. 8 is an overall exploded perspective view illustrating a disassembled second hinge unit 130 and third hinge unit 170 of FIG. 5.

In FIG. 8, the second hinge unit 130 includes the fixing member 131 which can be fixed to the second body 107, and the first hinge housing 132, one end of which can be rotatably fixed to the fixing member 131 and the other end can come into contact with the third body 109, as previously described herein.

The first hinge housing 132 can be rotatably supported, relative to the fixing member 131, by the first shaft 133. One end of the first shaft 133 can be fixed to the fixing member 131 with the first fastening screw 134, and the other end thereof can be secured by the first washer 135 and the first E-ring 136 over the first shaft 133 after the first shaft 133 has passed through a penetration hole 132g in the first hinge housing 132, for example. The first hinge housing 132 can be rotatably fixed to the fixing member 131 with the first washer 135, the first E-ring 136 and the first shaft 133, as illustrated in FIGS. 6 and 8, for example.

A fastener hole 131a through which the first fastening screw 134 can pass, and a fitting groove 131b, which can be formed around the fastener hole 131a to receive an extending part 133b of the first shaft 133, can be provided in the fixing member 131.

A first spring 137, a first ball guide 139, and a first click ball 138 can be additionally installed in the first hinge housing 132.

The first spring 137, which can be configured as a coil spring with a center, can be provided through which the first shaft 133 can pass at the center.

The first ball guide 139 can be elastically pressurized by the first spring 137 toward a surface of a first fixing part 133a of the first shaft 133. A first ball guide groove (not illustrated) into which the first click ball 138 can be inserted can be provided on one side of the first ball guide 139 corresponding to the first fixing part 133a of the first shaft 133. A first shaft groove 133d can be formed on one side of the first fixing part 133a of the first shaft 133 which corresponds to one side of the first ball guide 139. Because the depth of the first shaft groove 133d can be deeper than that of the first ball guide groove (not illustrated), the first click ball 138 can be seated in the first shaft groove 133d, for example

A projection 139b can be formed around the first ball guide 139, and can fit into a groove (not illustrated) formed on an inner circumference of the first hinge housing 132.

In the above-described configuration, if the third body 109 is rotated about the second hinge axis A2, the first hinge housing 132 and the first ball guide 139 can rotate together with the third body 109. At this time, the first click ball 138 fitted into the first shaft groove 133d can rotate while being in frictional contact with one side of the first ball guide 139, and can be inserted into the first ball guide groove (not illustrated).

When the third body 109 is rotated about the second hinge axis A2 using the first spring 137, the first ball guide 139 and the first click ball 138 can produce a rough clicking sound corresponding to frictional rotation thereof about second hinge axis A2.

The first hinge housing 132 can enable the third body 109 to be rotated clockwise or counterclockwise within approximately 270°. Accordingly, a first stopper 131d can be formed in the fixing member 131, and a first hook 132a can be formed on one side of the first hinge housing 132 corresponding to the fixing member 131 in a position spaced apart from the first stopper 131d. Here, the first hinge housing 132 can rotate to within approximately 270°, but various rotation angles (e.g., ≤ 270°) may also be applied. The number of first stoppers 131 d and first hooks 132a or the arc of rotation of the first stopper 131d and the first hook 132a may be set differently according to a desired rotation angle. Thus, a full rotation from about 0° to about 360° may also be possible, for example.

The third hinge unit 170 can be assembled on one side of the first hinge housing 132.

A connecting part 132b can be additionally installed on the other side of the first hinge housing 132 to connect the third hinge unit 170, as illustrated in FIGS. 5, 6, and 8.

The third hinge unit 170 can be configured similarly to the second hinge unit 130, the structural details of which are described below in accordance with one or more embodiments of the present general inventive concept.

The third hinge unit 170 can be rotatably fixed to one side of the first hinge housing 132 about the third hinge axis A3, and can include the second hinge housing 171 which is fixed to the third body 109. The second hinge housing 171 can be rotatably fixed to the first hinge housing 132 within a predetermined angle about the third hinge axis A3 by the second shaft 173. The third hinge axis A3 can be perpendicular to the second hinge axis A2.

One end of the second shaft 173 can be fixed to the connecting part 132b of the first hinge housing 132 with a second fastening screw 174, and the other end thereof can be secured by a second washer 175 and a second E-ring 176 after the second shaft 173 is passed through a penetration hole 171d in the second hinge housing 171.

The connecting part 132b of the first hinge housing 132 can include a fastener hole 132c through which the second fastening screw 174 can pass, and a fitting groove 132d which can be formed around the fastener hole 132c to receive an extending part 173b of the second shaft 173. The second shaft 173 can be connected to second fixing part 173a as illustrated in FIG. 8. A portable electronic device where the third hinge unit 170 further includes a second spring 177, which is installed in the second hinge housing 171 may be provided. A second ball guide179 elastically pressurized by the second spring 177 toward a surface of a second fixing part 173a of the second shaft 173 may be provided. A second click ball 178 disposed between one side of the second ball guide 179 and the second fixing part 173a of the second shaft 173 may be provided according to one or more embodiments of the present general inventive concept.

A second spring 177, a second ball guide 179, and a second click ball 178 can be installed in the second hinge housing 171.

The third hinge unit 170 can operate in the same manner as in the second hinge unit 130, but the third hinge unit 170 can be configured to rotate clockwise or counterclockwise within a tilting angle, for example, of approximately 30° to approximately -45°, which is less than the rotation angle of the first hinge housing 132 (e.g., ≤ 270°, or < 360°), for example.

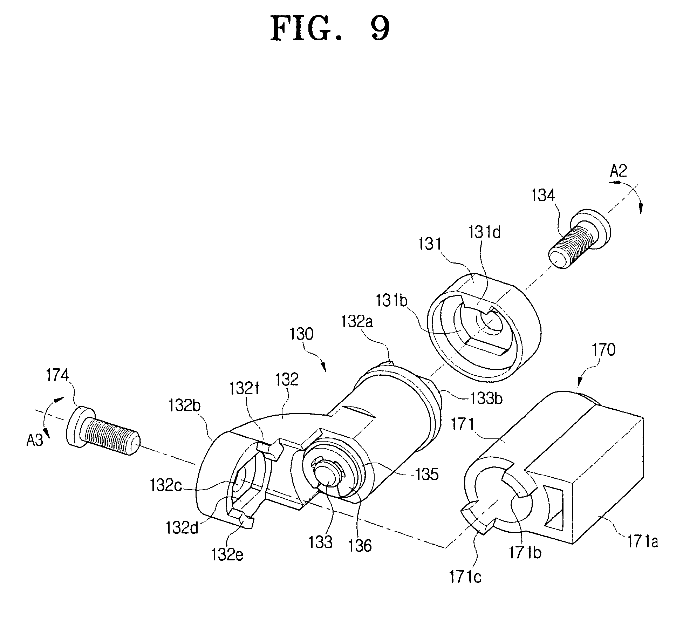

FIG. 9 is a perspective view illustrating the structure used to control a rotation angle of the third hinge unit 170 according to an exemplary embodiment of the present general inventive concept.

As illustrated in FIG. 9, two second stoppers 132e and 132f can be installed on the connecting part 132b of the first hinge housing 132, and two second hooks 171 b and 171 c spaced apart from the second stoppers 132e and 132f can be formed on one side of the second hinge housing 171, which can correspond to the connecting part 132b of the first hinge housing 132.

Here, two second stoppers 132e and 132f and two second hooks 171b and 171c can be formed, but the number of stoppers and hooks can be varied.

The first and second hinge housings 132 and 171 may be formed of a zinc die-casting alloy which can provide sufficient rigidity against failure of repeated movement of components and/or elements thereof, for example.

As described above, in the portable electronic device according to one or more exemplary embodiments of the present general inventive concept, the display unit can be rotated about three axes. Therefore, the photographing conditions can be improved for the user.

Additionally, installation space can be minimized by the assembly of the second hinge unit and the third hinge unit which are adapted to one or more exemplary embodiments of the present general inventive concept, and accordingly a small-sized electronic device can be readily provided.

Although a few embodiments of the present general inventive concept have been shown and described, it will be appreciated by those skilled in the art that changes may be made in these embodiments without departing from the scope defined in the appended claims.

## Claims

1. A portable electronic device (100) having a triaxial hinge structure, comprising:
an optical unit (101) for capturing an image;
a first body (103);
a second body (107) arranged to rotate about a first hinge axis (A1) relative to the first body (103);
a third body (109) arranged to rotate relative to the second body (107) not only about a second hinge axis (A2) but also about a third hinge axis (A3);
a first hinge unit (105) which enables the second body (107) to rotate about the first hinge axis (A1);
a second hinge unit (130) which enables the third body (109) to rotate about the second hinge axis (A2); and
a third hinge unit (170) which enables the third body (109) to rotate about the third hinge axis (A3),
wherein the third body (109) is a display unit (109) for displaying the image captured by the optical unit (101).

2. The device as claimed in claim 1, wherein the second hinge unit (130) comprises:
a fixing member (131) which is fixed to the second body (107);
a first hinge housing (132), one end of which is rotatably fixed to the fixing member (131) about the second hinge axis (A2), and the other end of which is fixed to the third body (109); and
a first shaft (133), one end of which is fixed to the fixing member (131), and the other end of which passes through the first hinge housing (132).

3. The device as claimed in claim 2, wherein the second hinge unit (130) further comprises:
a first spring (137) which is installed in the first hinge housing (132); and
a first ball guide (139), which is elastically pressurized by the first spring (137) toward a surface of a first fixing part (133a) of the first shaft (133), wherein a first click ball (138) is disposed between one side of the first ball guide (139) and the first fixing part (133a) of the first shaft (133).

4. The device as claimed in claim 2, wherein a first stopper (131d) is installed on one side of the fixing member (131), and a first hook (132a) is provided on one side of the first hinge housing (132) corresponding to the fixing member (131) to engage with the first stopper (131d) to control a rotation angle of the first hinge housing (132) about the second hinge axis (A2).

5. The device as claimed in claim 2, wherein the third hinge unit (170) comprises:
a second hinge housing (171), one end of which is rotatably fixed to one side of the first hinge housing (132) about the third hinge axis (A3), and the other end of which is fixed to the third body (109); and
a second shaft (173), one end of which is fixed to the first hinge housing (132), and the other end of which passes through the second hinge housing (171).

6. The device as claimed in claim 5, wherein the third hinge unit (170) further comprises:
a second spring (177), which is installed in the second hinge housing (171); and
a second ball guide (179), which is elastically pressurized by the second spring (177) toward a surface of a second fixing part (173a) of the second shaft (173), wherein a second click ball (178) is disposed between one side of the second ball guide (179) and the second fixing part (173a) of the second shaft (173).

7. The device as claimed in claim 5, wherein at least one second stopper (132e, 132f) is installed on one side of the first hinge housing (132), and at least one second hook (171b, 171c) is provided on one side of the second hinge housing (171) in a position spaced apart from the second stopper (132e, 132f).

## Patentansprüche

1. Tragbare elektronische Vorrichtung (100) mit einer dreiachsigen Gelenkstruktur, die umfasst:
eine optische Einheit (101) zum Aufnehmen eines Bildes;
einen ersten Körper (103);
einen zweiten Körper (107), der so eingerichtet ist, dass er sich relativ zu dem ersten Körper (103) um eine erste Gelenkachse (A1) dreht;
einen dritten Körper (109), der so eingerichtet ist, dass er sich relativ zu dem zweiten Körper (107) nicht nur um eine zweite Gelenkachse (A2), sondern auch um eine dritte Gelenkachse (A3) dreht;
eine erste Gelenkeinheit (105), die es dem zweiten Körper (107) ermöglicht, sich um die erste Gelenkachse (A1) zu drehen;
eine zweite Gelenkeinheit (130), die es dem dritten Körper (109) ermöglicht, sich um die zweite Gelenkachse (A2) zu drehen; und
eine dritte Gelenkeinheit (170), die es dem dritten Körper (109) ermöglicht, sich um die dritte Gelenkachse (A3) zu drehen,
wobei der dritte Körper (109) eine Anzeigeeinheit (109) zum Anzeigen des durch die optische Einheit (101) aufgenommenen Bildes ist.

2. Vorrichtung nach Anspruch 1, wobei die zweite Gelenkeinheit (130) umfasst:
ein Befestigungselement (131), das an dem zweiten Körper (107) befestigt ist;
ein erstes Gelenkgehäuse (132), dessen eines Ende um die zweite Gelenkachse (A2) drehbar an dem Befestigungselement (131) befestigt ist und dessen anderes Ende an dem dritten Körper (109) befestigt ist; und
eine erste Welle (133), deren eines Ende an dem Befestigungselement (131) befestigt ist und deren anderes Ende durch das erste Gelenkgehäuse (132) hindurch verläuft.

3. Vorrichtung nach Anspruch 2, wobei die zweite Gelenkeinheit (130) des Weiteren umfasst:
eine erste Feder (137), die in dem ersten Gelenkgehäuse (132) installiert ist; und
eine erste Kugelführung (139), die durch die erste Feder (137) elastisch auf eine Fläche eines ersten Befestigungsteils (133a) der ersten Welle (133) zu gedrückt wird,
wobei eine erste Einrastkugel (138) zwischen einer Seite der ersten Kugelführung (139) und dem ersten Befestigungsteil (133a) der erste Welle (133) angeordnet ist.

4. Vorrichtung nach Anspruch 2, wobei ein erster Anschlag (131 b) an einer Seite des Befestigungselementes (131) installiert ist und ein erster Haken (132a) an einer Seite des ersten Gelenkgehäuses (132) dem Befestigungselement (131) entsprechend vorhanden ist, um mit dem ersten Anschlag (131d) in Eingriff zu kommen und einen Drehwinkel des ersten Gelenkgehäuses (132) um die zweite Gelenkachse (A2) zu begrenzen.

5. Vorrichtung nach Anspruch 2, wobei die dritte Gelenkeinheit (170) umfasst:
ein zweites Gelenkgehäuse (171), dessen eines Ende um die dritte Gelenkachse (A3) drehbar an einer Seite des ersten Gelenkgehäuses (132) befestigt ist und dessen anderes Ende an dem dritten Körper (109) befestigt ist; und
eine zweite Welle (137), deren eines Ende an dem ersten Gelenkgehäuse (132) befestigt ist und deren anderes Ende durch das zweite Gelenkgehäuse (171) hindurch verläuft.

6. Vorrichtung nach Anspruch 5, wobei die dritte Gelenkeinheit (170) des Weiteren umfasst:
eine zweite Feder (177), die in dem zweiten Gelenkgehäuse (171) installiert ist, und
eine zweite Kugelführung (179), die durch die zweite Feder (177) elastisch auf eine Fläche eines zweiten Befestigungsteils (173a) der zweiten Welle (173) zu gedrückt wird, wobei eine zweite Einrastkugel (178) zwischen einer Seite der zweiten Kugelführung (179) und dem zweiten Befestigungsteil (173a) der zweiten Welle (173) angeordnet ist.

7. Vorrichtung nach Anspruch 5, wobei wenigstens ein zweiter Anschlag (132e, 132f) an einer Seite des ersten Gelenkgehäuses (132) installiert ist und wenigstens ein zweiter Haken (171 b, 171 c) an einer Seite des zweiten Gelenkgehäuses (171) an einer Position vorhanden ist, die von dem zweiten Anschlag (132e, 132f) beabstandet ist.

## Revendications

1. Un appareil électronique portable (100) ayant une structure articulée triaxiale, comprenant :
une unité optique (101) pour la capture d'une image ;
un premier corps (103) ;
un deuxième corps (107) aménagé pour tourner autour d'un premier axe articulé (A1) relatif au premier corps (103) ;
un troisième corps (109) aménagé pour tourner relative par rapport au deuxième corps (107), pas seulement autour d'un deuxième axe articulé (A2) mais aussi autour d'un troisième axe articulé (A3) ;
une première unité articulée (105) qui permet au deuxième corps (107) de tourner autour du premier axe articulé (A1) ;
une deuxième unité articulée (130) qui permet au troisième corps (109) de tourner autour du deuxième axe articulé (A2) ; et
une troisième unité articulée (170) qui permet au troisième corps (109) de tourner autour du troisième axe articulé (A3),
où le troisième corps (109) est une unité d'affichage (109) pour afficher l'image capturée par l'unité optique (101).

2. L'appareil revendiqué selon la revendication 1, où la deuxième unité articulée (130) comprend :
un membre de fixation (131) fixé au deuxième corps (107) ;
un premier habitacle articulé (132), dont l'une extrémité est fixée de manière rotative au membre de fixation (131) autour du deuxième axe articulé (A2), et dont l'autre extrémité est fixée au troisième corps (109) ; et
un premier arbre (133), dont l'une extrémité est fixée au membre de fixation (131), et dont l'autre extrémité passe à travers le premier habitacle articulé (132).

3. L'appareil selon la revendication 2, où la deuxième unité articulée (130) comprend en outre :
un premier ressort (137) qui est installé dans le premier habitacle articulé (132) ; et
une première glissière de guidage de bille (139), élastiquement mise sous pression par le premier ressort (137) vers une surface d'une première pièce de fixation (133a) du premier arbre (133), où une première bille
d'enclenchement (138) est disposée entre un côté de la première glissière de guidage de bille (139) et la première pièce de fixation (133a) du premier arbre (133).

4. L'appareil revendiqué selon la revendication 2, où un premier stoppeur (131d) est installé sur un côté du membre de fixation (131), et un premier crochet (132a) est pourvu sur un côté du premier habitacle articulé (132) correspondant au membre de fixation (131) pour s'engager avec le premier stoppeur (131d) pour contrôler un angle de rotation du premier habitacle articulé (132) autour du deuxième axe articulé (A2).

5. L'appareil revendiqué selon la revendication 2, où la troisième unité articulée (170) comprend :
un deuxième habitacle articulé (171), dont l'une extrémité est fixée de manière rotative à un côté du premier habitacle articulé (132) autour du troisième axe articulé (A3), et dont l'autre extrémité est fixée au troisième corps (109) ; et
un second arbre (173), dont l'une extrémité est fixée au premier habitacle articulé (132), et dont l'autre extrémité passe à travers le second habitacle articulé (171).

6. L'appareil revendiqué selon la revendication 5, où la troisième unité articulée (170) comprend en outre :
un deuxième ressort (177), qui est installé dans le deuxième habitacle articulé (171) ; et
une deuxième glissière de guidage de bille (179), élastiquement mise sous pression par le deuxième ressort (177) vers une surface d'une deuxième pièce de fixation (173a) du deuxième arbre (173), où une deuxième bille d'enclenchement (178) est disposée entre un côté de la deuxième glissière de bille (179) et la deuxième pièce de fixation (173a) du premier arbre (173).

7. L'appareil revendiqué selon la revendication 5, où au moins un deuxième stoppeur (132e, 132f) est installé sur un côté du premier habitacle articulé (132), et au moins un deuxième crochet (171b, 171c) est pourvu sur un côté du deuxième habitacle articulé (171) dans une position à l'écart du deuxième stoppeur (132e, 132f).
